# EUROPÄISCHE PATENTSCHRIFT

(11) **EP 0 890 211 B1**
(45) Veröffentlichungstag und Bekanntmachung des Hinweises auf die Patenterteilung: **25.09.2002**
(21) Anmeldenummer: 97914091.0
(22) Anmeldetag: 29.01.1997
(51) Int. Cl.: H02H 7/085

(54) **ANSCHLAGS- UND BLOCKIERERKENNUNG BEI EINEM ELEKTROMOTOR**
PROCESS FOR DETECTING ABUTMENT AND BLOCKING IN AN ELECTRIC MOTOR
PROCEDE DE DETECTION DE VENUE EN BUTEE ET DE BLOCAGE DANS UN MOTEUR ELECTRIQUE

(30) Priorität: 29.03.1996 DE 19612596
(43) Veröffentlichungstag der Anmeldung: 13.01.1999
(73) Patentinhaber: GKR Gesellschaft für Fahrzeugklimaregelung mbH, 71229 Leonberg (DE)
(72) Erfinder: BREITLING, Wolfram, D-74343 Sachsenheim (DE); MUNZ, Juergen, D-70771 Leinfelden (DE); EISENHARDT, Harald, D-71227 Rutesheim (DE)
(74) Vertreter: Behrens, Ralf Holger, Dipl.-Phys.
(86) Internationale Anmeldenummer: DE9700155
(87) Internationale Veröffentlichungsnummer: WO97037416

(56) Entgegenhaltungen:
- EP-A- 0 479 045
- DE-A- 19 514 954
- GB-A- 2 290 178

## Beschreibung

### Stand der Technik

Die Erfindung geht aus von einer Anschlags- und Blockiererkennung bei einem Elektromotor, insbesondere Schritt- oder Kommutatormotor, der im Oberbegriff des Anspruchs 1 definierten Gattung.

Aus DE 44 19 813 A1 ist eine Vorrichtung zum Betreiben eines Elektromotors, Schrittmotor bzw. Kommutatormotor, bekannt, die eine Überlastung oder ein Blockieren des Antriebs, für den der Elektromotor die Kraftquelle ist, aus einer Kenngröße eines durch den Elektromotor fließenden Stromes auswertet. Die Ermittlung der Kenngröße kann danach entweder innerhalb eines Zeitintervalls, welches noch innerhalb des Einschaltvorganges nach einer Startzeit des Elektromotors liegt, erfolgen, oder zu einem vorgegebenen Abtastzeitpunkt, der eine gewisse Verzögerungszeit nach dem Startpunkt liegt. Als Kenngröße des auszuwertenden Stromes kann die Stromamplitude, die Stomänderung oder eine Stromdifferenz dienen, dieals Signal für die Anschlags- bzw. Blockiererkennung gewertet wird. Wesentlich bei dieser bekannten Vorrichtung ist es, daß der Elektromotor zu Beginn des genannten Startpunktes wenigstens annäherungsweise stromlos sein sollte und daß das Zeitintervall bzw. der Abtastzeitpunkt vor dem Erreichen des stationären Motorstroms liegt.

Einschub für die Beschreibungseinleitung (anzufügen an Seite 2, Zeile 4 der Beschreibung)

### Vorteile der Erfindung

Die erfindungsgemäße Anschlags- und Blockiererkennung bei einem Elektromotor mit den kennzeichnenden Merkmalen des Anspruchs 1 hat demgegenüber den Vorteil einer kostengünstigeren Realisierung einer Anschlags- und Blockiererkennung. Diese ist in vorteilhafter Weise möglich, ohne eine zusätzliche Positionsrückmeldung, beispielsweise durch Potentiometer, bzw. ohne eine Bewegungsrückmeldung, z.B. durch Hallsensoren.

Gemäß der Erfindung wird dies prinzipiell dadurch erreicht, daß neben der Erfassung des durch eine Wicklung des Motors fließenden Stromes, die aktuelle Betriebsspannung und der Widerstand der Motorwicklung erfaßt wird, daß alle drei Parameter einer Auswerteschaltung zugeführt und im Vergleich mit Referenzwerten festgestellt wird, ob der Motor blockiert oder beweglich ist, wobei je nach den ermittelten Werten der aktuellen Betriebsspannung und des Widerstands der Motorwicklung der Referenzwert für den Strom festgelegt wird.

Durch die in den weiteren Ansprüchen niedergelegten Maßnahmen sind vorteilhafte Weiterbildungen und Verbesserungen der im Anspruch 1 angegebenen Anordnung möglich.

Eine erste vorteilhafte Ausführungsform sieht vor, daß die Erfassung des Widerstands der Motorwicklung mittels einer vor Ort Messung der Wicklungstemperatur erfolgt.

Eine zweite vorteilhafte Ausführungsform sieht vor, daß die Erfassung des Widerstands der Motorwicklung mittels Widerstandsbestimmung durch Messung des Spannungsabfalls an einem bekannten Meßwiderstands, der mit der Wicklung in Reihe schaltbar ist, bei stehenden Motor erfolgt.

Aus der DE-A 195 14 954 sind eine Vorrichtung und ein Verfahren zum Steuern von Fahrzeugfenstern bekannt. Eine Blockierungsdetektion wird durch Vergleichen des beobachteten Stroms mit einem vorhergesagten Strom erreicht. Wenn sie sich um mehr als einen bestimmten Schwellenwert unterscheiden, wird eine Blockierung angenommen. Um die Auswirkungen von Temperatur- und/oder Batteriespannungsänderungen zu kompensieren, ohne eine Kurve für jeden Betriebszustand lernen zu müssen, wird der Strom des Motors normiert. Diese Normierung für bspw. die Blockierungsschwellenwerte erfolgt durch eine Gleichung für den erwarteten oder vorhergesagten Motorstrom, in der sowohl die Temperatur des elektrischen Streumoduls als auch die aktuelle Betriebsspannung eingehen.

Aus der EP-A 479 045 ist eine Vorrichtung zum Betreiben von elektromotorisch angetriebenen Teilen bekannt. Eine signalverarbeitende Anordnung wertet die Drehzahl des Elektromotors oder eines Antriebs aus. Die Drehzahl ist eine Kenngröße, die einen Bezug zur Betätigungskraft des Teiles aufweist, der durch den funktionalen Zusammenhang zwischen Drehzahl und Drehmoment des Elektromotors oder des Antriebs gegeben ist. Zur Korrektur des Temperatureinflusses auf die Kennlinien ist ein Temperatursensor vorgesehen, der eine am Elektromotor auftretende Temperatur, vorzugsweise die Wicklungstemperatur, erfasst und zur signalverarbeitenden Anordnung weiterleitet. Ferner kann ein Einfluss einer veränderlichen Betriebsspannung auf die Kenngröße berücksichtigt werden. Für den Einfluss der Temperatur auf den funktionalen Zusammenhang ist der ohmsche Widerstand der Wicklung, der von der tatsächlichen Wicklungstemperatur abhängt, entscheidend.

Eine Anschlagserkennung, wie sie durch die Erfindung zur Verfügung gestellt ist, wobei es sich hier um eine Blockierung durch den mechanischen Anschlag handelt, erhöht den Komfort des Systems, bei dem es angewandt wird, da die Geräuschbelästigung durch den Lauf des Motors gegen einen Anschlag reduziert wird. Durch die Anschlagserkennung kann die Anzahl der Schritte von Anschlag zu Anschlag bei Schrittmotoren automatisiert und ohne zusätzlichen Aufwand ausgemessen werden.

Eine Blockiererkennung, wie sie durch die Erfindung zur Verfügung gestellt ist, ermöglicht den Einsatz von Fehlerbehandlungskonzepten im Fehlerfall. Damit ist insgesamt Komfort und Flexibilität des Systems wesentlich verbessert.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch ein Blockschaltbild der erfindungsgemäß gestalteten Anschlags- und Blockiererkennung, und
- Fig. 2: schematisch ein Schaltungsbeispiel zur Ermittlung des Wicklungswiderstandes.

### Beschreibung des Ausführungsbeispiels

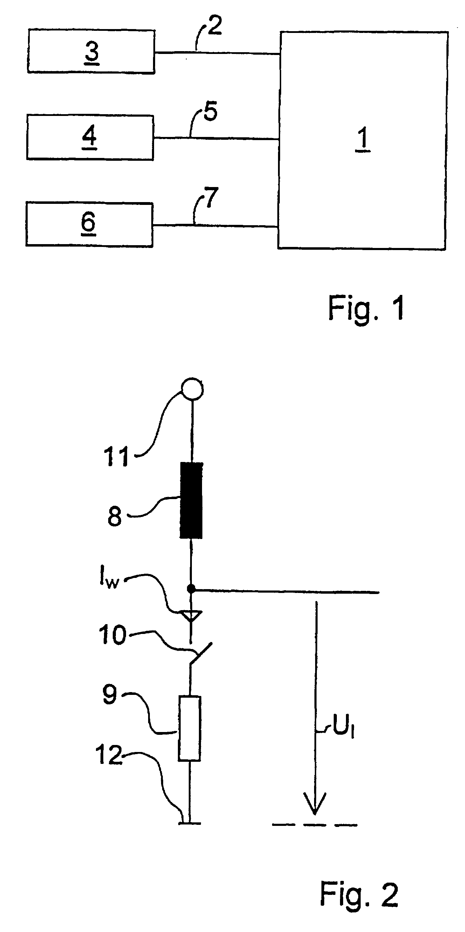

In Fig. 1 ist schematisch ein Blockschaltbild der erfindungsgemäß gestalteten Anschlags- und Blockiererkennung dargestellt. Einer Auswerteschaltung 1 wird über eine Eingangsleitung 2 der Wert der aktuellen Betriebsspannung zugeführt, welcher durch eine Erfassungsschaltung 3 festgestellt wird. In einer weiteren Erfassungsschaltung 4 wird der Widerstandswert der Motorwicklung erfaßt und über eine Leitung 5 der Auswerteschaltung 1 zugeführt. Eine dritte Erfassungsschaltung 6 ermittelt den aktuellen Strom, der durch die Motorwicklung fließt. Der entsprechende Wert wird über eine Leitung 7 der Auswerteschaltung 1 zugeführt. Der Strom, welcher durch die Wicklung eines blockierten Motors fließt, ist größer als der bei nicht blockiertem Motor.

Gemäß der Erfindung berücksichtigt die Auswerteschaltung 1 bei der Auswertung des Stromes für die Beweglichkeit oder das Blockieren des Motors, neben dem durch die Erfassungsschaltung 6 ermittelten, durch die Motorwicklung fließenden Stromes als Signal für die Anschlags- bzw. Blockiererkennung, die von den Erfassungsschaltungen 3 bzw. 4 ermittelten Werte der aktuellen Betriebsspannung bzw. Wicklungswiderstandes. Je nach den ermittelten Werten werden die Referenzwerte des Schwellwertes für den Strom verändert. Über nicht näher dargestellte Ausgangsleitungen gibt die Auswerteschaltung 1 ihr ermitteltes Anschlagssignal bzw. Blockiersignal an die angeschlossenen Schaltungen zur weiteren Berücksichtigung ab.

Die Erfindung macht sich die Tatsache zu Nutze, daß der Strom durch die Wicklung eines Elektromotors, wie zum Beispiel eines Schrittmotors, von drei Parametern abhängig ist. Zum ersten von der anliegenden Betriebsspannung, zum zweiten vom Widerstand der Motorwicklung und zum dritten von der Beweglichkeit des Elektromotors.

Geht man beispielsweise von dem Einsatz der Erfindung in einem Kraftfahrzeug aus, so ist klar, daß die Betriebsspannung im Fahrzeug etwa um den Faktor 2 variieren kann. Der Bereich der Betriebstemperatur eines solchen Motors kann im angesprochenen Einsatzgebiet beispielsweise zwischen etwa -40°C und etwa 85°C variieren, so daß der Widerstandswert der Kupferwicklung des Elektromotors ebenfalls etwa um den Faktor 2 variiert. Bei Erfassung dieser Störeinflüsse Betriebsspannung und Motorwicklungswiderstand kann der Strom durch eine Motorwicklung als Maß für die Beweglichkeit des Ankers des Motors herangezogen werden. Der durch die Wicklung eines blockierten Elektromotors fließende Strom ist größer als der bei bewegtem Anker fließende Strom.

Die Erfassungsschaltung 4 für die Ermittlung des Widerstandswertes der Wicklung kann die Messung vor Ort der Temperatur der Motorwicklung beinhalten und daraus den Widerstandswert errechnen und ein entsprechendes Signal über Leitung 5 an die Auswerteschaltung 1 abgeben.

Alternativ kann, wie in Fig. 2 schematisch dargestellt, die Ermittlung des Wicklungswiderstandes in der Erfassungsschaltung 4 durch die Erfassung des Widerstands einer Motorwicklung 8 mittels Widerstandsbestimmung durch Messung des Spannungsabfalls U_{I} an einem bekannten Meßwiderstands 9, z.B. eines Meßshunts, der mit der Wicklung 8 durch einen Schalter 10 zwischen einem Batterieanschluß 11 und Massepotential 12 in Reihe schaltbar ist, bei stehenden Motor erfolgen.

In vorteilhafter Weise ist mittels der Erfindung eine unter verschiedensten Betriebsbedingungen sehr kostengünstige und sichere Erfassung von Anschlags- und Blockiersituationen eines Elektromotors ermöglicht. Dies ist insbesondere beim Einsatz solcher Elektromotoren zu Antriebszwecken in Kraftfahrzeugen von besonderem Wert.

## Patentansprüche

1. Anschlags- und Blockiererkennung bei einem Elektromotor, insbesondere Schritt- oder Kommutatormotor, bei der durch Messung des aktuellen Stromes und Vergleich mit einem Referenzwert in einer Auswerteschaltung (1) ein Signal für die Anschlags- bzw. Blockiererkennung ermittelt wird,
daß die aktuelle Betriebsspannung (2, 3) und der durch eine Wicklung des Motors fließende Strom (6, 7) erfasst werden,
wobei diese Parameter der Auswerteschaltung (1) zugeführt werden,
**dadurch gekennzeichnet,**
**daß** weiterhin der Widerstand (4, 5) der Motorwicklung erfasst und der Auswerteschaltung (1) zugeführt wird,
wobei je nach den ermittelten Werten der aktuellen Betriebsspannung (2, 3) und des Widerstandes (4, 5) der Motorwicklung der Referenzwert für den Strom festgelegt wird.

2. Anschlags- und Blockiererkennung nach Anspruch 1, **dadurch gekennzeichnet, daß** die Erfassung (4) des Widerstands der Motorwicklung mittels einer vor Ort Messung der Wicklungstemperatur erfolgt.

3. Anschlags- und Blockiererkennung nach Anspruch 1, **dadurch gekennzeichnet, daß** die Erfassung (4) des Widerstands der Motorwicklung (8) mittels Widerstandsbestimmung durch Messung des Spannungsabfalls (U_{I}) an einem bekannten Meßwiderstands (9), der mit der Wicklung (8) durch in Reihe schaltbar (10) ist, bei stehenden Motor erfolgt.

## Claims

1. Stopping and blocking identification for an electric motor, in particular a stepping or commutator motor, in which a signal for stopping or blocking identification is determined by measuring the actual current and comparing this with a reference value in an evaluation circuit (1),
in that the actual operating voltage (2, 3) and the current flowing through a winding of the motor (6, 7) are detected,
with these parameters being supplied to the evaluation circuit (1),
**characterized**
**in that** the resistance (4, 5) of the motor winding is also detected, and is supplied to the evaluation circuit (1),
with the reference value for the current being defined as a function of the determined values of the actual operating voltage (2, 3) and of the resistance (4, 5) of the motor winding.

2. Stopping and blocking identification according to Claim 1, **characterized in that** the detection (4) of the resistance of the motor winding is carried out by means of a local measurement of the winding temperature.

3. Stopping and blocking identification according to Claim 1, **characterized in that** the detection (4) of the resistance of the motor winding (8) is carried out by establishing the resistance by measuring the voltage drop (U₁) across a known measurement resistor (9), which can be connected (10) in series with the winding (8), when the motor is stationary.

## Revendications

1. Procédé de détection de butée de blocage d'un moteur électrique notamment d'un moteur pas à pas ou d'un moteur à collecteur selon lequel en mesurant l'intensité actuelle et en la comparant à une tension de référence dans un circuit de traitement (1) on forme un signal pour la détection de la venue en butée ou du blocage,
selon lequel on saisit la tension de fonctionnement actuelle (2, 3) et l'intensité (6, 7) passant par l'enroulement du moteur, et on fournit ces paramètres au circuit de traitement (1),
**caractérisé en ce qu'**
on saisit en outre la résistance (4, 5) de l'enroulement du moteur et on la fournit au circuit de traitement (1),
et suivant les valeurs obtenues de la tension de fonctionnement actuelle (2, 3) et de la résistance (4, 5) de l'enroulement du moteur, on fixe la valeur de référence de l'intensité.

2. Procédé de détection de venue en butée de blocage selon la revendication 1,
**caractérisé en ce que**
la saisie (4) de la résistance de l'enroulement du moteur se fait à l'aide d'une mesure sur place de la température de l'enroulement.

3. Procédé de détection de venue en butée de blocage selon la revendication 1,
**caractérisé en ce que**
la saisie (4) de la résistance de l'enroulement (8) du moteur se fait, lorsque le moteur est arrêté, à l'aide d'une détermination de résistance en mesurant la chute de tension (U_{I}) sur une résistance de mesure (9) connue qui peut être branchée en série (10) avec l'enroulement (8).
